Europäisches Patentamt

European Patent Office

Office européen des brevets

(19)

(11) Veröffentlichungsnummer: **0 073 807**
**B1**

(12) # EUROPÄISCHE PATENTSCHRIFT

(45) Veröffentlichungstag der Patentschrift:
**31.07.85**

(21) Anmeldenummer: **82900945.5**

(22) Anmeldetag: **11.03.82**

(86) Internationale Anmeldenummer:
**PCT/EP 82/00049**

(87) Internationale Veröffentlichungsnummer:
**WO 82/03156** (30.09.82 Gazette 82/23)

(51) Int. Cl.⁴: **A 23 F 5/26**, A 23 F 5/34,
B 01 D 53/26, B 01 D 1/18,
A 23 F 5/08, A 23 F 3/28

(54) **VERFAHREN UND ANLAGE ZUR HERSTELLUNG VON SOFORT LÖSLICHEN TROCKENEXTRAKTEN AUS NATÜRLICHEN STOFFEN.**

(30) Priorität: **16.03.81 DE 3110020**

(43) Veröffentlichungstag der Anmeldung:
**16.03.83 Patentblatt 83/11**

(45) Bekanntmachung des Hinweises auf die Patenterteilung:
**31.07.85 Patentblatt 85/31**

(84) Benannte Vertragsstaaten:
**AT BE CH DE FR GB LI LU NL SE**

(56) Entgegenhaltungen:
**WO - A - 82/00596**
**FR - A - 1 001 374**
**FR - A - 1 560 877**
**FR - A - 1 566 489**
**GB - A - 1 410 308**
**GB - A - 2 031 570**
**US - A - 1 687 112**
**US - A - 2 788 276**

(73) Patentinhaber: **MITTEX AKTIENGESELLSCHAFT,
Aeulestrasse 5, FL-9490 Vaduz (LI)**

(72) Erfinder: **HUSSMANN, Peter, Via del Pucci 4,
I-50100 Florenz (IT)**

(74) Vertreter: **Haug, Dietmar et al, Patentanwälte Andrae,
Flach, Haug Steinstrasse 44, D-8000 München 80 (DE)**

**Beschreibung**

Die Erfindung betrifft ein Verfahren und eine Anlage zur Herstellung von sofort löslichen Trockenextrakten aus natürlichen Stoffen.

Zu den sofort löslichen Trockenextrakten gehört z. B. der sog. Instantkaffee.

Bei der Herstellung von Instantkaffee ist es bisher üblich, die gerösteten Bohnen mittels Mühlen in Teilchen von 0,5 bis 3 mm Größe zu zerkleinern und die gemahlenen Bohnen dann einer Extraktionsanlage zuzuführen, die aus mehreren miteinander verschalteten Extraktionssäulen oder Perkolatoren besteht, in die der zerkleinerte Kaffee eingefüllt wird. Unter hohem Druck wird dann sehr heißes Wasser oder Dampf durch die Extraktionssäulen geführt, wobei angefangen wird mit der Säule, die den am stärksten ausgelaugten Kaffee enthält und geendet wird mit der Säule, die mit frischem Kaffee gefüllt ist. Nach dem Austritt der Lösung aus der mit frischem Kaffee gefüllten Säule ist der Extraktgehalt dieser Lösung auf etwa über 30% gestiegen. Nach der Abkühlung der heißen Lösung auf etwa 10° C wird sie wiederum unter hohem Druck am oberen Ende eines Trockenturmes eingeführt und dort versprüht. Ebenfalls am oberen Ende wird heiße Luft eingeführt, die die Flüssigkeitstropfen verwirbelt und in einer Spiralbahn nach unten trägt, wobei ein Großteil des Wassers verdampft. In einer nachgeschalteten Zyklonenanlage wird das entstandene Pulver vom Luftstrom abgeschieden.

Eine andere Art der Trocknung ist die sog. Gefriertrocknung. Hierbei wird der Kaffee-Extrakt tiefgefroren und anschließend wird aus dem tiefgefrorenen Kaffee-Extrakt unter Bildung von Hochvakuum und anschließender Zufuhr von Wärme der Wasserdampf als Gas ausgetrieben (Sublimation), so daß ein rasch lösliches Kaffeegranulat zurückbleibt.

Eine Alternative der Gefriertrocknung ist das sog. Instantisieren. Hierbei wird eine Lösung, Emulsion, Suspension, Paste oder dgl. aus flüssigen und festen Bestandteilen zunächst zu einem Pulver getrocknet. Um dieses noch schwer lösliche Pulver in ein rasch lösliches Granulat überführen zu können, wird das Pulver befeuchtet, worauf es erneut getrocknet wird.

Unabhängig davon, welches von den bekannten Verfahren für die Trocknung des Kaffee-Extraktes nun verwendet wird, hat die herkömmliche Art der Instantkaffeeherstellung den Nachteil, daß nur unter einem hohen Einsatz von Betriebs- und/oder Investitionskosten und einem hohen Energieaufwand aufgrund der hohen Drücke und Temperaturen Ausbeuten an Trockensubstanz von etwa 37% erzielt werden können, wobei noch hinzukommt, daß die Aromaqualität des Kaffees aufgrund der hohen Drücke und Temperaturen, die sowohl bei der Extraktion als auch bei der nachfolgenden Trocknung zur Anwendung gelangen, sehr stark leidet.

Ein Verfahren und eine Anlage zur Herstellung eines sofort löslichen Trockenextraktes aus einem natürlichen Stoff gemäß dem Oberbegriff des Patentanspruchs 1 bzw. 8 ist aus der FR-A-1 001 374 bekannt. Dieses Verfahren setzt sich zusammen aus der Vermahlung des Stoffes, einem Extraktionsvorgang, einer anschließenden Vorkonzentration des flüssigen Extraktes, der Dehydratation des vorkonzentrierten Extraktes und der Entfeuchtung des Trocknungsgasstroms. Die Extraktion kann derart durchgeführt werden, daß der gemahlene Stoff durch Extraktlösungen abnehmender Konzentration hindurch bewegt wird, wobei sich die Extraktlösungen weiter anreichern und der Stoff immer stärker ausgelaugt wird. Die Extraktion kann aber auch so ausgeführt werden, daß der gemahlene Stoff mit einer Extraktlösung relativ hoher Konzentration vermischt wird, die Mischung in eine Zentrifuge eingebracht wird, eine angereicherte Extraktlösung in der Zentrifuge abgetrennt und der Vorkonzentration zugeführt wird, der Extraktionsrückstand der Zentrifuge entnommen und mit einer schwächeren Extraktlösung vermischt wird, die dabei entstehende Mischung in eine weitere Zentrifuge eingebracht wird und die in der weiteren Zentrifuge gewonnene Extraktlösung zusammen mit Kondensat, das bei der Vorkonzentrierung angefallen ist, bei der der Abtrennung in der weiteren Zentrifuge vorausgehenden Vermischung und bei der der Abtrennung in der ersten Zentrifuge vorausgehenden Vermischung verwendet wird. Die Dehydratation des vorkonzentrierten Extraktes erfolgt durch Sprühtrocknung, wobei ein heißer Gasstrom eingesetzt wird.

Auch bei diesem Verfahren ist der Energieaufwand relativ hoch und die Beeinträchtigung des Aromas des Stoffes groß und kann eine besonders hohe Ausbeute nicht erwartet werden.

Die Aufgabe der Erfindung besteht darin, das gattungsgemäße Verfahren und die gattungsgemäße Anlage so auszubilden, daß mit einem geringeren Einsatz von Investitionskosten und insbesondere Betriebskosten eine höhere Ausbeute an Trockensubstanz relativ schnell erzielt wird, wobei im Falle von aroma- und geschmacksstoffreichen Ausgangsstoffen, die Trockensubstanz einen noch hohen Anteil dieser Aroma- und Geschmacksstoffe hat.

Diese Aufgabe wird mit den Merkmalen des kennzeichnenden Teils des Patentanspruchs 1 bzw. mit den Merkmalen des kennzeichnenden Teils des Patentanspruchs 8 gelöst.

Die Vorteile des erfindungsgemäßen Verfahrens und der erfindungsgemäßen Anlage liegen insbesondere darin, daß durch die fast kolloidal feine Vermahlung des Stoffes die anschließende Extraktion unter den erfindungsgemäßen Bedingungen eine sehr hohe Ausbeute erbringt und durch die erfindungsgemäße niedrige Schichthöhe des Extraktionsgutes eine rasche Abtrennung des flüssigen Extraktes von den Feststoffen ermöglicht wird, was dem Erhalt der Aroma- und Geschmacksstoffe zugute kommt. Die Extraktionstemperatur ist erfindungsgemäß so gewählt, daß einerseits wertvolle Bestandteile des Ausgangsstoffes, wie zum Beispiel die Aroma- und Geschmacksstoffe, nicht beeinträchtigt werden und daß andererseits sichergestellt ist, daß die Extraktivstoffe relativ rasch in Lösung gehen. Die Abtrennung des flüssigen Extraktes von den Feststoffen wird auch dadurch erleichtert, daß anders als beim vorbekannten Verfahren die Extraktlösungen abnehmender Konzentration nacheinander in dieselbe Menge des natürlichen Stoffes eingeführt und davon wieder getrennt werden. Die relativ niedrige Verfahrenstemperatur wirkt sich vorteilhaft auf den Energieaufwand zur Durchführung des Verfahrens aus.

Der mit dem erfindungsgemäßen Extraktionsverfahren erzielte Trockensubstanzgehalt ist so hoch, daß der bei der Extraktion gewonnene flüssige Extrakt unmittelbar der Dehydratation zugeführt werden kann, und nicht, wie beim vorbekannten Verfahren, einer Vorkonzentration unterworfen werden muß, die wegen der hohen Temperatur des dabei eingesetzten Gasstromes wertvolle Bestandteile, wie zum Beispiel die Aroma- und Geschmacksstoffe, beeinträchtigen kann.

Da bei der erfindungsgemäßen Dehydratation mit einer niedrigeren Temperatur als bei der herkömmlichen Sprühtrocknung gearbeitet wird, ist der Gesamtenergieaufwand des erfindungsgemäßen Verfahrens niedriger als der des vorbekannten Verfahrens. Außerdem wird der zu trocknende Extrakt in keiner Weise durch den Trocknungsgasstrom beeinträchtigt.

Unter energetischen Gesichtspunkten ist die durch Adsorption vorgenommene Entfeuchtung des Trocknungsgasstromes wesentlich günstiger als die Kondensation des Trocknungsgasstromes beim vorbekannten Verfahren, denn zur Austreibung der Feuchtigkeit aus dem Adsorptionsmittel kann ein volumenmäßig kleinerer Gasstrom eingesetzt werden, der zur Aufheizung und zur Abkühlung wesentlich weniger Energie erfordert als der Trocknungsgasstrom benötigen würde, wenn er in einem Kondensator abgekühlt und anschließend wieder aufgeheizt werden müßte.

Die erfindungsgemäße Dehydratation wird mit der erfindungsgemäßen Extraktion kombiniert, weil bei der erfindungsgemäßen Dehydratation nur ein flüssiger Extrakt mit einem relativ hohen Trockensubstanzgehalt dehydratisiert werden kann und ein so hoher Trockensubstanzgehalt nur mit dem erfindungsgemäßen Extraktionsverfahren erzielbar ist.

Die US-A-1 687 112 beschreibt ein Extraktionsverfahren, bei dem die Extraktivstoffe, ebenso wie beim erfindungsgemäßen Verfahren, mit Extraktlösungen abnehmender Konzentration nach dem Gegenstromprinzip extrahiert werden. Die Verfahrenstemperatur ist jedoch sehr niedrig und wird vorzugsweise sogar unter 15°C angesetzt. Auch das Ausgangsmaterial ist relativ grob zerkleinert und hat eine Korngröße von 850 μm (20 mesh). Die Extraktion findet in einem Säulenextraktor statt, in welchem die Höhe der Schicht wesentlich größer als ihre Breite ist. Bevor der Extrakt höchster Konzentration aus dem Extraktor abgezogen werden kann, ist eine Standzeit von 12 Stunden erforderlich, um sicherzustellen, daß genügend Extraktivstoffe in Lösung gegangen sind. Solche lange Standzeiten verzögern aber nicht nur den Verfahrensablauf, sondern wirken sich auch nachteilig auf den Geschmack und das Aroma des Extraktes aus. Das Endprodukt des vorbekannten Extraktionsverfahrens ist ein flüssiger Extrakt, der durch die Anwendung von Hitze sterilisiert wird. Die bei der Extraktion eingesparte Energie muß also später bei der Sterilisation des flüssigen Extraktes wieder aufgebracht werden.

Zwar ist aus der FR-A-1 560 877 ein Verfahren zur Dehydratation des flüssigen Extraktes bekannt, bei welchem der flüssige Extrakt fein verteilt in einem entfeuchteten Trocknungsgasstrom auf einen für den zu trocknenden Extrakt undurchlässigen, für den Trocknungsgasstrom jedoch durchlässigen Träger aufgebracht wird, wobei sich auf dem Träger eine dehydratisierte Extraktstoffschicht bildet, die anschließend in ein Extraktgranulat und/oder -pulver zerlegt wird und die Temperatur des Trocknungsgasstromes gering ist, über die Herstellung des Extraktes und die Aufbereitung des Trocknungsgasstromes wird in dieser Druckschrift allerdings nichts gesagt.

Beim erfindungsgemäßen Verfahren hat die Teilchengröße des Ausgangsstoffes in Verbindung mit der Schichthöhe im Extraktor einen entscheidenden Einfluß auf die Ausbeute und, wenn es sich zum Beispiel um Kaffee handelt, auch auf das Aroma und den Geschmack des Trockenextraktes. Als besonders vorteilhaft zur Erzielung einer hohen Ausbeute und ggf. Erhaltung der Aroma- und Geschmacksstoffe ist es, wenn der natürliche Stoff zu Teilchen mit einer Korngröße von 1 bis 50 μm zerkleinert und auf dem Filtermedium in einer Schichthöhe von 20 bis 40 mm aufgebracht wird und wenn die Extraktlösungen durch Druck, vorzugsweise Unterdruck, aus dem Extraktor wieder abgeführt werden.

Insbesondere bei der Verarbeitung von aroma- und geschmacksstoffreichen Stoffen zu sofort löslichen Trockenextrakten hat sich als vorteilhaft erwiesen, wenn die Mahlung in einer geschmacks- und geruchsneutralen Vorrichtung im wesentlichen ohne Temperaturerhöhung möglichst in zwei Stufen durchgeführt wird, wobei in der ersten Stufe lediglich eine grobe Zerkleinerung des natürlichen Stoffes und in der zweiten Stufe eine Feinstvermahlung des grob zerkleinerten Stoffes stattfinden soll.

Die Höhe der Ausbeute kann dann nochmals gesteigert werden, wenn die Feinstmahlung als Naßmahlung unter Zugabe von Extraktionsflüssigkeit, vorzugsweise einer Extraktlösung höchster Konzentration, erfolgt. Die Naßmahlung kann auch dadurch erfolgen, daß dem zu vermahlenden Stoff eine Menge des bei der Extraktion ausgelaugten Stoffes zugegeben wird.

Ein wesentlicher Vorteil gegenüber herkömmlichen Verfahren unter dem Gesichtspunkt des Energieaufwandes und der Erhaltung des Aromas und der Geschmacksstoffe besteht darin, daß die Extraktion im wesentlichen bei einer Verfahrenstemperatur zwischen 15°C und 30°C durchgeführt wird. Will man eine weitere Erhöhung der Ausbeute erzielen, ohne daß die Aromaqualität des gewonnenen Trockenextraktes zu stark beeinträchtigt wird, kann die Extraktion gegen Ende jeder Stufe, wenn die Lösungen eine relativ niedrige Konzentration haben, bei einer Temperatur durchgeführt werden, die über der normalen Verfahrenstemperatur liegt. Hierdurch können dann Ausbeuten in der Größenordnung von 60% erzielt werden, ohne daß spürbare Aromaeinbußen hinzunehmen sind und ein hoher Energieaufwand erforderlich wäre.

Die Art der Dehydratation bei dem erfindungsgemäßen Verfahren hat den Vorteil, daß das zu dehydratisierende Gut äußerst schonend behandelt wird, was gerade bei aroma- und geschmacksstoffreichen Stoffen von großer Bedeutung ist. Außerdem erfolgt die Dehydratation bei dem erfindungsgemäßen Verfahren unter wesentlich geringerem Energieaufwand und geringeren allgemeinen Betriebskosten als bei der Gefriertrocknung.

Das bei der Trocknung gewonnene Kondensat kann bei der Extraktion wieder verwendet werden, wodurch sich der Vorteil ergibt, daß die Kosten für die Herstellung bzw. Aufbereitung des Lösungsmittels niedrig gehalten werden können und die im Kondensat noch enthaltenen Aromastoffe nicht verlorengehen. Eine Aromarückführung kann ferner alternativ oder zusätzlich auch dadurch erfolgen, daß mittels eines im Kreis geführten Gasstromes dem natürlichen Stoff die leichtflüchtigen Aromastoffe vor dem Extraktionsvorgang entzogen und nach der Trocknung wieder zugeführt werden.

Für eine optimale Struktur der bei der Trocknung aufgebauten Extraktschicht und für ihren Austrag aus der Trocknungsanlage hat sich als zweckmäßig erwiesen, wenn der Aufbau der Extraktstoffschicht kontinuierlich oder intermittierend in einer Vielzahl von Einzelschichten erfolgt, wobei die Gesamtschichthöhe zwischen 10 und 200 mm, vorzugsweise jedoch zwischen 10 und 100 mm, liegen sollte.

Um zu vermeiden, daß der Träger für die Extraktschicht beim ersten Auftrag der zu dehydratisierenden Lösung gleich verstopft wird, ist es zweckmäßig, wenn auf dem Träger zunächst eine Schicht Extraktpulver und dann erst die zu dehydratisierende Lösung aufgebracht wird. Als Alternative kann auch der pulverisierte Trockenextrakt mit der zu dehydratisierenden Lösung dem gasförmigen Trocknungsmedium ausgesetzt werden. In beiden Fällen tritt eine Agglomeration des Pulvers ein.

Um die Löslichkeit des getrockneten Extraktes zu erhöhen und den Kaffee-Extrakt aufzuhellen, ist es zweckmäßig, das Konzentrat bei der Einbringung in den Dehydrator zu verschäumen, d. h. Inertgas oder Luft zuzusetzen. Als besonders vorteilhafte Vorrichtung für das Dispergieren der zu dehydratisierenden Lösung hat sich ein Düsensystem erwiesen, das rotierende Düsen aufweist. Besonders kostengünstig und zweckmäßig sind die nach Art von Traglufthallen ausgebildeten Dehydratoren.

Besonders energiesparend arbeitet auch die Entfeuchtungsvorrichtung für das Trocknungsgas, die als wesentlichen Bestandteil einen oder mehrere Rotationsadsorber aufweist. Wie bereits oben angedeutet, kommt der Entfeuchtungsvorrichtung auch eine große Bedeutung bei der Erzielung der hohen Aromaqualität des Endproduktes zu.

Es ist hervorzuheben, daß das erfindungsgemäße Verfahren und die Anlage zu seiner Durchführung einen sehr weiten Anwendungsbereich hat und nicht beschränkt ist auf die Gewinnung von sofort löslichen Trockenextrakten aus aroma- und geschmacksstoffreichen Stoffen, wenn auch bei diesen Stoffen mit dem erfindungsgemäßen Verfahren und der Anlage die meisten Vorteile zu erzielen sind. Insbesondere bei der Herstellung von Instantkaffee ist ein entscheidender Fortschritt gemacht worden, der sich durch den Ausbeutevorteil, eine Produktionskostensenkung und einer Steigerung der Qualität des Endproduktes auszeichnet.

Die Erfindung ist im folgenden am Beispiel der Herstellung von Instantkaffee unter Bezugnahme auf die beiliegenden Zeichnungen näher erläutert. Es zeigt

Fig. 1 die Herstellung von Instantkaffee, von der Röstung der Kaffeebohnen bis kurz vor der Verpackung des Endproduktes in Form eines Fließbildes,

Fig. 2 den Trocknungsprozeß für den Kaffee-Extrakt, ebenfalls in Form eines Fließbildes,

Fig. 3 einen Rotationsadsorber für den in Fig. 2 dargestellten Trocknungsprozeß, als schematischen Querschnitt und

Fig. 4 eine Dispergierdüse zur Einführung des flüssigen Kaffee-Extraktes in die in den Figuren 1 und 2 dargestellten Trocknungsvorrichtungen als schematischen Längsschnitt.

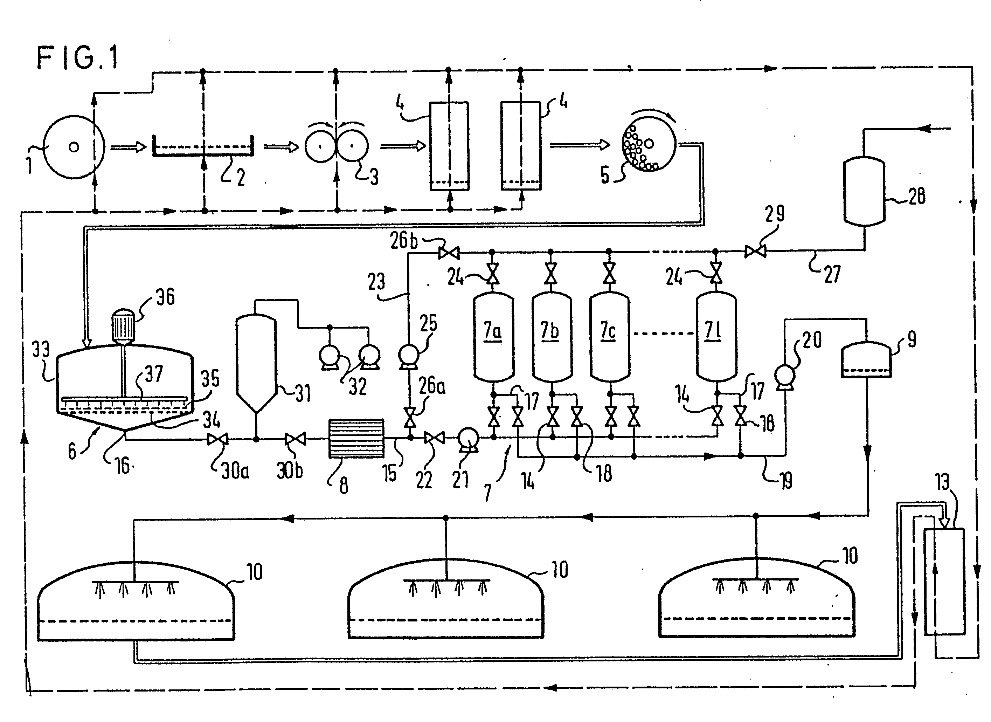

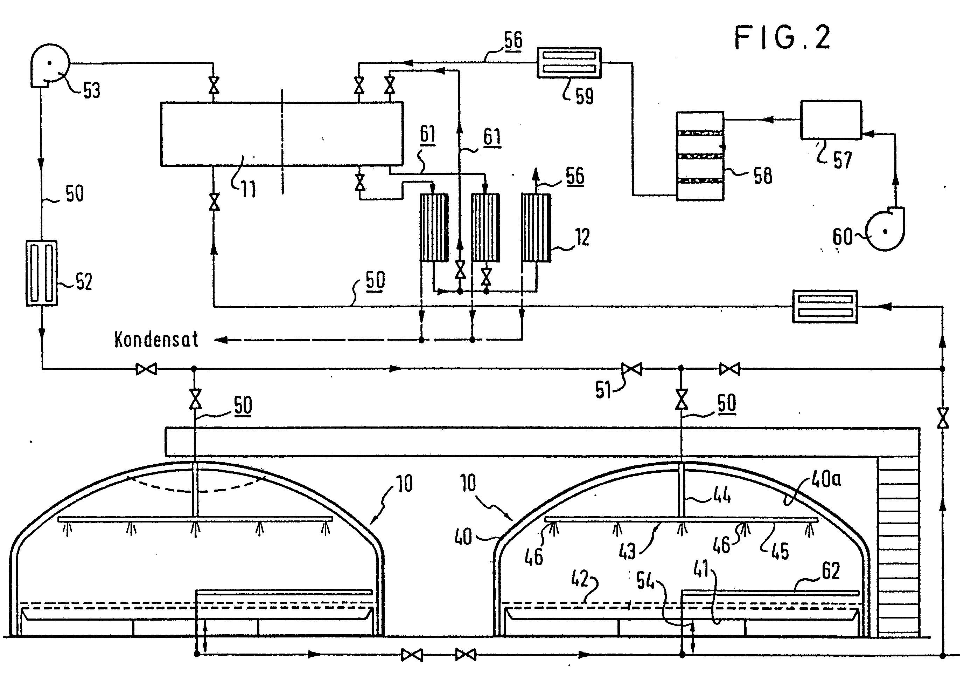

Im Prinzip verläuft die in der Fig. 1 dargestellte Herstellung von Instantkaffee, einschließlich des in Fig. 2 näher dargestellten Trocknungsprozesses, wie folgt.

Grüne Kaffeebohnen werden einem Röster 1 zugeführt, in welchem sie zur Ausbildung des Aromas in bekannter Weise thermisch behandelt werden. Die gerösteten Bohnen werden dann in einer an sich bekannten Kühleinrichtung 2 abgekühlt. Danach werden die abgekühlten Kaffeebohnen in einer Walzenmühle 3 in grobe Stücke zerkleinert, dann einer Aromadesorptionsvorrichtung 4 zugeführt und schließlich in einer Kugelmühle 5 fast kolloidal fein gemahlen. Der feinstgemahlene Kaffee wird dann in den Flachbettfilterextraktor 6 einer Extraktionsanlage gegeben, die eine Batterie 7 von miteinander verschalteten Behältern 7a bis 71 aufweist, die mit dem Flachbettfilterextraktor 6 verbunden sind.

Der nun folgende Extraktionsprozeß in der Extraktionsanlage erfolgt nach dem sog. Gegenstromprinzip und dient dem Entzug der im Kaffee enthaltenen Extraktivstoffe. Der Extraktionsprozeß setzt sich aus einem einmaligen Vorschaltprozeß zur »Einstellung« des Konzentrationsgefälles der Behälterbatterie und einem sich anschließenden kontinuierlich durchführbaren Hauptprozeß zusammen.

4

Beim Vorschaltprozeß wird zunächst vorbehandelte, gereinigtes Frischwasser, vorzugsweise destilliertes Wasser, als Lösungsmittel in die frische Kaffeeschüttung im Flachbettfilterextraktor 6 geleitet, dort mit ihr vermischt und als dünne Lösung, deren Konzentration mit zunehmender Auslaugung des Kaffees noch mehr abnimmt, wieder abgeführt und der Reihe nach in die Behälter 7b bis 7l eingespeichert, wobei in den Behälter 7b eine entsprechende Lösungsmenge höchster Konzentration und in den Behälter 7l eine entsprechende Lösungsmenge niedrigster Konzentration gelangen. Die Konzentrationen der in den einzelnen Behältern 7b bis 7l lagernden Lösungsmengen werden nun jeweils schrittweise dadurch erhöht, daß in jedem von mehreren aufeinanderfolgenden Durchgängen oder jeder Stufe alle Lösungsmengen nacheinander in eine bei jedem Durchgang oder jeder Stufe in den Flachbettfilterextraktor 6 frisch eingebrachte Kaffeeschüttung jeweils eingeführt, mit ihr vermischt, von ihr wieder abgetrennt und dann wieder in denselben Behälter zurückgeführt werden. Mit der schrittweisen Erhöhung der Konzentrationen der Lösungsmengen in den einzelnen Behältern 7b bis 7l wird auch die Temperatur der Lösungsmengen, die jeweils die relativ niedrigen Konzentrationen haben, durch Wärmetausch mit einem geeigneten Medium in einem Wärmetauscher 8 erhöht, während die Lösungsmengen relativ hoher Konzentration im wesentlichen kalt bleiben.

Wenn die Behälterbatterie 7 konzentrationsmäßig »eingestellt« ist, d. h. wenn die Lösungsmengen in den Behältern 7b bis 7l ein bestimmtes Konzentrationsgefälle und eine bestimmte Temperaturverteilung erreicht haben, beginnt der Hauptextraktionsprozeß.

Am Anfang des Hauptextraktionsprozesses wird die im Behälter 7b lagernde Lösungsmenge höchster Konzentration in den Flachbettfilterextraktor 6 eingeführt, in den eine frische Menge feinstgemahlenen Kaffees eingebracht worden ist. Die jetzt aus dem Extraktor 6 abgeführte Lösung hat eine nochmals erhöhte Konzentration, und diese Lösungsmenge wird in den Behälter 7a eingeführt. Dann wird die in dem Behälter 7c lagernde Lösungsmenge zweithöchster Konzentration in den Extraktor 6 geführt, dort mit dem bereits im vorhergehenden Durchgang etwas ausgelaugten Kaffee vermischt und wieder abgeführt. Die aus dem Extraktor 6 austretende Lösung hat jetzt eine Konzentration, die vorher die im Behälter 7b lagernde Lösungsmenge hatte und wird jetzt auch in den Behälter 7b eingespeist. In entsprechender Weise werden die Konzentrationen der in den restlichen Behältern 7d bis 7l befindlichen Lösungsmengen erhöht und jeweils in den Behälter zurückgeführt, der im vorausgehenden Durchgang noch die Lösungsmenge mit der nächsthöheren Konzentration enthielt.

Zeitlich unabhängig von diesem Vorgang wird die in dem Behälter 7a eingespeiste Lösungsmenge höchster Konzentration über den Filter oder Separator 9 den Trocknungsvorrichtungen oder Dehydratoren 10 einer Trocknungsanlage zugeführt.

Wenn die Konzentrationen aller Lösungsmengen erhöht und die Lösungsmengen um einen Behälter »vorgerückt« worden sind, wird der Behälter 7l mit im Trocknungsprozeß gewonnenem Kondensat, mit Restfeuchtigkeit aus dem dem Extraktor 6 inzwischen entnommenen und durch frischen Kaffee ersetzen ausgelaugten Kaffee und, soweit notwendig, mit destilliertem Wasser aufgefüllt. Danach beginnt der beschriebene Prozeß von neuem.

Der jeweils dem Behälter 7a entnommene flüssige Kaffee-Extrakt wird in den Dehydratoren 10 dadurch getrocknet, daß er oberhalb eines Filterbetts fein verteilt in ein strömendes, gasförmiges Trocknungsmedium eingeführt und nach unten auf das Filterbett bewegt wird, wo er sich als poröse Schicht niederschlägt.

Als Trocknungsmedium wird ein im geschlossenen Kreislauf geführter Luft- oder Inertgasstrom verwendet, der nach Aufnahme von im Kaffee-Extrakt enthaltener Feuchtigkeit in den Dehydratoren 10 in einem Rotationsadsorber 11 wieder getrocknet wird. Der Adsorber 11 wird mittels eines aufgeheizten, trockenen Gasstromes regeneriert, der nach dem Durchströmen des Adsorbers 11 seine Wärme und die im Adsorber 11 aufgenommene Feuchtigkeit als Kondensat im Wärmeaustauscher 12 wieder abgibt. Das Kondensat wird der Extraktionsanlage wieder zugeführt.

Die in jedem Dehydrator 10 gebildete, noch zusammenhängende poröse Extraktschicht, wird mittels einer rotierenden Abschälvorrichtung zu einem Granulat zerlegt, das den Dehydratoren 10 entnommen und einem Aromareadsorber 13 zugeführt wird, in dem ihm dem Kaffee bei der Röstung, Kühlung, Mahlung in der Walzenmühle 3 und im Aromadesorber 4 durch einen im geschlossenen Kreislauf geführten Gasstrom entzogene Aromastoffe wieder zugeführt werden. Nach der Aromareadsorption wird der nun fertige Instantkaffee der Verpackung zugeführt.

Im folgenden wird nun die oben im Prinzip aufgezeigte Herstellung von Instantkaffee soweit näher beschrieben, als es zur weiteren Erläuterung der Erfindung notwendig ist.

Nach der Röstung im Röster 1 und Abkühlung in der als Kühlsieb ausgebildeten Kühlvorrichtung 2 werden die Kaffeebohnen in der Walzenmühle 3 in relativ grobe Stücke zerbrochen, um die später folgende Feinstmahlung des Kaffees in der Kugelmühle 5, die mit Porzellan ausgekleidet ist, um vollkommene Geschmacks- und Geruchsneutralität zu gewährleisten, zu erleichtern, zeitlich abzukürzen oder überhaupt zu ermöglichen. Unter Feinstmahlung des Kaffees wird hier verstanden, daß die Korngröße einer Siebmaschenweite deutlich unter 100 $\mu$ entspricht, insbesondere in einem Bereich von 1 bis 50 $\mu$, im Durchschnitt jedoch zwischen 2 und 20 $\mu$ liegt. Feinstmahlung in diesem Zusammenhang bedeutet also ein fast kolloidal feines Zermahlen des Kaffees. Die in der Walzenmühle 3 vorgebrochenen Kaffeebohnen werden in der Kugelmühle 5 naß oder trocken gemahlen. Die Naßmahlung erfolgt dadurch, daß den vorgebrochenen Kaffeebohnen bei der Feinstmahlung eine Lösungsmenge höchster Konzentration oder wenn eine solche noch nicht vorhanden ist, destilliertes Wasser hinzugegeben wird.

Bei dem Herstellungsverfahren von Instantkaffe nach der Erfindung findet ein Aromakreislauf statt, der darin besteht, daß im letzten Stadium der Röstung, während der Kühlung, sowie bei der Grobmahlung in der Walzenmühle 3 und in dem eigens für diesen Zweck vorgesehenen Aromadesorptionsapparat 4 die leicht desorbierbaren Aromastoffe dem Kaffee entzogen und dem Trockenprodukt in dem Aromareadsorber 13 wieder zugeführt werden. Die Aromadesorption und spätere Integration der Aromastoffe werden mittels eines Inertgasstromes bewirkt, der im Kreis geführt die einzelnen Aggregate und Vorrichtungen 1, 2, 3, 4 und 13 durchströmt, wie es in Fig. 1 durch die gestrichelten Linien dargestellt ist, wobei die Strömungsrichtung durch die Pfeile angegeben ist.

Die Extraktionsanlage für den der Feinstmahlung sich anschließenden Extraktionsprozeß besteht im wesentlichen aus dem Flachbettfilterextraktor 6 und der Batterie 7 von einzelnen miteinander verschalteten Behältern. Im vorliegenden Ausführungsbeispiel sind zwölf solcher Behälter vorgesehen, die von 7a bis 7l gekennzeichnet sind, wobei der Einfachheit halber nur die ersten drei Behälter 7a bis 7c und der letztere Behälter 7l der Batterie dargestellt ist. Jeder Behälter 7a bis 7l ist mit seinem unteren Ende unter Zwischenschaltung eines Absperrventils 14 an eine Leitung 15 angeschlossen, die unter Zwischenschaltung einer Förderpumpe 21, eines Absperrventils 22 und eines Wärmetauschers 8 zu einer am unteren Ende des Flachbettfilterextraktors 6 angeordneten Ein- bzw. Auslaßöffnung 16 führt, und über die die in den Behältern 7b bis 7l gespeicherten Lösungsmengen zu dem Flachbettfilterextraktor 6 geleitet werden. Zwischen der Förderpumpe 21 und dem Wärmetauscher 8 zweigt von der Leitung 15 eine Leitung 23 ab, an die die Behälter 7a bis 7l unter Zwischenschaltung von Absperrventilen 24 mit ihrem jeweils oberen Ende angeschlossen sind und über die die Lösungsmengen nach Erhöhung ihrer Konzentration im Extraktor wieder in die Behälter 7a bis 7l zurückgeführt werden. Eine Förderpumpe 25 und zwei Absperrventile 26a und 26b sind in der Leitung 23 angeordnet. Eine Leitung 27 verbindet unter Zwischenschaltung eines Absperrventils 29 einen Lösungsmittelbehälter 28 mit der Behälterbatterie 7. Zwischen dem unteren Ende jeden Behälters 7a bis 7l und dem jeweiligen Absperrventil 14 zweigt ein Leitungsstück 17 ab, das unter Zwischenschaltung eines Absperrventils 18 in eine Sammelleitung 19 mündet, die unter Zwischenschaltung einer Förderpumpe 20 und des Filters oder Separators 9 zu drei Dehydratoren 10 einer Trocknungsanlage führt. Zwischen zwei in der Leitung 15 angeordneten Absperrventilen 30a und 30b ist ein Abscheider 31 angeschlossen, der mit zwei Vakuumpumpen 32 verbunden ist.

Der Flachbettfilterextraktor 6 besteht aus einem geschlossenen Gehäuse 33, in dem sich in der Nähe des Bodens ein horizontalliegender Rost 34 mit hexagonaler oder prismatischer Wabenstruktur befindet. Dieser Rost 34 dient als stützende Unterlage für ein monofiles Gewebe 35, das als Filter- oder Trennmedium dient und auf ihm aufliegt. Oberhalb des Filtermediums 35 ist ein von einem Motor 36 antreibbares Rührwerk 37 angebracht, das so ausgebildet ist, daß es nicht nur zum Rühren, sondern auch dazu eingesetzt werden kann, in der sich auf dem Filtermedium befindlichen Kaffeschlämme mit zunehmender Trocknung sich bildende Risse zuzustreichen. Das monofile Gewebe 35 ist ein Kunststoffgewebe auf Polypropylen-, Polyester- oder Polyamidbasis mit einer Maschenweite von 10 bis 40 μ. Die Einführung des Lösungsmittels bzw. der Lösung in den Flachbettfilterextraktor 6 und die Rückführung der Lösung aus dem Extraktor 6 erfolgt über die unterhalb des Filtermediums 35 und des Rostes 34 angeordnete Einlaß- bzw. Auslaßöffnung 16.

Die Extraktionsanlage arbeitet nach dem sog. Gegenstromprinzip, wobei in einem Vorschaltprozeß die Behälterbatterie 7 zunächst »eingestellt« wird und dann der eigentliche, kontinuierlich durchführbare Extraktionsvorgang folgt.

Der Vorschaltprozeß zur »Einstellung« der Behälterbatterie 7 läuft wie folgt ab. Feinstgemahlener Kaffee wird auf dem Filtermedium des Extraktor 6 aufgebracht. Die Schütthöhe des Kaffeepulvers bzw. im Falle der Naßmahlung die Höhe der Kaffeeschlämme, liegt immer zwischen 1 und 200 mm, vorzugsweise zwischen 10 und 30 mm, auch bei dem später folgenden eigentlichen Extraktionsprozeß, da bei der außerordentlichen Feinheit des Pulvers bzw. der Schlämme der Trennvorgang bei höheren Schichten zu schwierig und hauptsächlich zu langsam ablaufen würde. Es werden dann die Behälter 7b bis 7l mit Lösungsmittel aus dem Speicherbehälter 28 beschickt. Als Lösungsmittel kommt vorbehandeltes, gereinigtes Wasser, das ggf. mit einem nicht dargestellten Ionenaustauscher entsalzt worden ist, vorzugsweise jedoch destilliertes Wasser, zur Verwendung.

Die in den Behältern 7b eingespeiste Lösungsmittelmenge wird über die Leitung 15 von unten in den Flachbettfilterextraktor 6 eingeführt, wobei die Kaffeeschüttung aufgewirbelt wird und die löslichen Stoffe des Kaffees in Lösung gehen. Zur Beschleunigung des Vorgangs wird das Kaffeepulver mit dem Lösungsmittel mittels des Rührwerks 37 intensiv vermischt. Nach Schließung des zwischen dem Abscheider 31 und der Behälterbatterie 7 in der Leitung 15 angeordneten Ventils 30b werden die Pumpen 32 eingeschaltet, um eine noch dünne Lösung durch das Filter- oder Trennmedium 35 hindurch aus dem Extraktor 6 abzusaugen und in dem Abscheider 31 zwischenzulagern. Mit fortschreitendem Entzug der Feuchtigkeit in der Kaffeeschlämme entsteht auf dem Trennmedium 35 ein Filterkuchen, der selbst eine filtrierende und trennende Wirkung auf die im Kaffee befindlichen festen Bestandteile hat. Die in dem Filterkuchen mit zunehmender Trocknung entstehenden Risse werden mittels des Rührwerks 37, das inzwischen entsprechend umgestellt worden ist, wieder zugestrichen.

6

Ist die im Extraktor 6 entstandene Lösung vollständig abgesaugt, wird das Ventil 30a geschlossen und das Ventil 30b geöffnet. Nach Schließung des Ventils 22 wird mittels der Pumpe 25, die im Abscheider 31 zwischengelagerte Lösung in den Behälter 7b zurückgepumpt. In entsprechender Weise wird die in den Behälter 7c eingespeiste Lösungsmittelmenge in den Extraktor von unten eingeführt, mit dem bereits etwas ausgelaugten Kaffee vermischt und als dünne Lösung wieder abgesaugt und in den Behälter 7b zurückgepumpt. Dieses Verfahren wird so lange fortgesetzt, bis auch die restlichen Behälter 7d bis 7l jeweils eine Lösung enthalten, deren Konzentration von Behälter zu Behälter abnimmt. Dann wird der ausgelaugte Filterkuchen im Extraktor durch eine frische Kaffeeschüttung ersetzt. In einem zweiten Durchgang wird nun wieder die im Behälter 7b lagernde Lösungsmenge in den Extraktor 6 geleitet, mit dem Kaffee intensiv vermischt und als Lösung mit erhöhter Konzentration wieder abgesaugt und in den Behälter 7b zurückgeführt. In entsprechender Weise wird mit den in den Behältern 7c bis 7l lagernden Lösungsmengen verfahren, so daß sich am Ende des zweiten Durchgangs in jedem Behälter 7b bis 7l eine Lösung mit insgesamt erhöhter Konzentration befindet. Es folgen so viele weitere Durchgänge, bis sich die Konzentration der in dem Behälter 7b befindlichen Lösungsmenge auf etwa 40% erhöht hat. Durch Wärmeaustausch in dem Wärmetauscher 8 mit einem geeigneten Medium, wie z. B. Dampf, wird die Temperatur der in den Extraktor 6 eingeführten Lösungsmengen so eingestellt, daß die Lösung aus dem Behälter 7b die niedrigste und die Lösung aus dem Behälter 7l die höchste Temperatur hat. Der hier beschriebene Einstellprozeß wird durch die untenstehende Tabelle anhand konkreter Temperaturwerte und Konzentrationen nochmals verdeutlicht.

Nach der »Einstellung« der Behälterbatterie 7 wird nun im Falle der Naßmahlung die Lösung höchster Konzentration aus dem Behälter 7b entnommen und in der Kugelmühle 5 dem noch nicht feinstgemahlenen Kaffeepulver zugemischt. Am Ende des daran anschließenden Mahlprozesses liegt eine Schlämme aus Kaffee-Extrakt in flüssiger Form und feinstgemahlenem Kaffee vor. Diese Schlämme wird nun dem Extraktor 6 zugeführt. Mittels der Pumpen 32 wird nur die in der Schlämme enthaltene Flüssigkeit mit den in ihr gelösten Stoffen durch das Trennmedium 35 gesaugt, wobei die festen Bestandteile im Extraktor 6 zurückbleiben und, wie während des Einstellprozesses der Behälterbatterie 7, einen in sich selbst filterenden und trennenden Filterkuchen bilden, der mit zunehmenndem Entzug von Flüssigkeit immer fester wird. Die aus dem Extraktor 6 austretende Lösung weist nun eine nochmals erhöhte Konzentration auf. Diese Lösung wird nun in dem Behälter 7a der Batterie 7 für die spätere Trocknung zwischengelagert.

Anschließend wird die jeweilige Konzentration der Lösungen in den Behältern 7c bis 7l der Batterie 7 wie folgt erhöht.

Zunächst wird die Lösung aus dem Behälter 7c in den Extraktor 6 eingeführt und zwar wieder so, daß die vorher auf dem Trennmedium 35 gebildete Feststoffschicht aufgewirbelt wird. Um dabei das Trennmedium einem Spüleffekt zu unterziehen, erfolgt die Einführung der Lösung von unten durch die Öffnung 16 und das Trennmedium 35 in den Bereich über dem Trennmedium 35. Da jedoch die Feststoffschicht infolge der extrem feinen Mahlung und der Absaugung der Lösung im vorhergehenden Verfahrensabschnitt einen festen Kuchen gebildet hat, würde die in diesem Verfahrensabschnitt aus dem Behälter 7c in den Extraktor 6 eingeführte Lösung nicht ausreichen, die Feststoffschicht ausreichend aufzuwirbeln. Für das Verfahren ist es aber von wesentlicher Bedeutung, daß aus der eingeführten Lösung und dem Filterkuchen zunächst wieder eine gute durchmischte Schlämme entsteht, wie sie ähnlich beim vorhergehenden Verfahrensabschnitt vorlag. In dem Extraktor 6 wird deshalb wieder das Rührwerk 37 eingeschaltet. Ist die Schlämme gut durchmischt, wird eine erneute Trennung durch Absaugung vorgenommen. Danach ist die Konzentration dieser Lösung angemessen erhöht, sie soll der Konzentration der Lösung entsprechen, die zu Beginn des Verfahrens im Behälter 7b enthalten war, also im Beispiel etwa 40%, und die so angereicherte Lösung wird nach dem Verlassen des Extraktors auch in den Behälter 7b eingeleitet.

In der gleichen Weise werden nun nacheinander die Lösungen aus den Behältern 7d bis 7l angereichert und in den jeweils »nächsthöheren« Behälter eingeleitet.

Die Konzentration der Lösungsmengen in den Behältern 7b bis 7l wird auf diese Weise nacheinander erhöht, die Konzentration der Lösung des Behälters 7c wird auf den Wert angehoben, den vorher die Lösung des Behälters 7b hatte, und die Lösung aus dem Behälter 7c gelangt über den Extraktor 6 in den Behälter 7b, die Konzentration des Behälters 7d wird auf die Konzentration gebracht, die vorher die Lösung des Behälters 7c hatte, und die Lösung des Behälters 7d gelangt über den Extraktor in den Behälter 7c und so fort, so daß am Ende der Batterie am Ende dieses Verfahrensabschnittes die Lösung des Behälters 7l auf die Konzentration gebracht ist, die vorher die Lösung des Behälters 7k hatte und die Lösung des Behälters 7l über den Extraktor 6 in den Behälter 7k gelangt ist.

Zeitlich unabhängig von dem Ablauf dieses Verfahrensabschnittes wird nun die zunächst im Behälter 7a eingespeicherte Lösung höchster Konzentration der Trocknung bzw. Dehydratation zugeführt.

Der Behälter 7l wird wieder gefüllt mit Lösungsmittel, das sich zusammensetzt aus Kondensat, das bei der Trocknung angefallen ist, Restfeuchtigkeit, die durch Auspressung des dem Extraktor 6 entnommenen Filterkuchens gewonnen worden ist, und ggf. einer ergänzenden Menge von destilliertem Wasser. Dieses Lösungsmittel ist dem Behälter 7l über den Speicherbehälter 28 und die Leitung 27 her zugeführt worden. Durch Wärmeaustausch in dem Wärmetauscher 8 wird die dem Behälter 7l später

entnommene Lösungsmittelmenge auf den Temperaturwert erhöht werden, der durch die »Einstellung« der Batterie vorgegeben ist.

Es ist noch darauf hinzuweisen, daß Temperaturabsenkungen der einzelnen Lösungsmengen durch Wärmeverluste in der Extraktionsanlage dadurch vermieden werden, daß die einzelnen Lösungsmengen immer wieder über den Wärmetauscher 8 geführt werden.

Die nachstehende Tabelle veranschaulicht anhand von Zahlenwerten die Ausbildung bzw. die Erhaltung des Konzentrationsgefälles bzw. der Temperaturverteilung der Lösungsmengen in der Behälterbatterie 7 während des Einstellungs- und Hauptextraktionsprozesses, wobei ein Verhältnis von gemahlenem Kaffee, der aus einer 1 : 1 Mischung aus den Kaffeesorten Robusta und Arabica besteht, und Lösungsmittel von 1 : 5 zugrundegelegt worden ist.

| Behälter-batterie | Einstellung °C | % | % | % | % | Hauptextraktions-prozess % | % |
|---|---|---|---|---|---|---|---|
| 7a | | | | | | 50 | 50 |
| 7b | 15—30 | 10 | 20 | 30 | 40 | 40 | 40 |
| 7c | 30 | 8 | 16 | 24 | 32 | 32 | 32 |
| 7d | 30 | 6 | 12 | 18 | 24 | 24 | 24 |
| 7e | 30 | 4 | 8 | 12 | 16 | 16 | 16 |
| 7f | 40 | 2 | 4 | 6 | 8 | 8 | 8 |
| 7g | 50 | 1 | 2 | 3 | 4 | 4 | 4 |
| 7h | 60 | 0,5 | 1 | 1,5 | 2 | 2 | 2 |
| 7i | 70 | 0,25 | 0,5 | 0,75 | 1 | 1 | 1 |
| 7j | 80 | 0,125 | 0,25 | 0,375 | 0,75 | 0,75 | 0,75 |
| 7k | 90 | 0,06 | 0,12 | 0,18 | 0,24 | 0,24 | 0,24 |
| 7l | 100 | 0,03 | 0,06 | 0,09 | 0,12 | 0,12 | 0,12 |

Die Dehydratation der jeweiligen Lösungsmenge höchster Konzentration, die dem Behälter 7a entnommen wird, findet in den Dehydratoren 10 der in Fig. 2 dargestellten Trocknungsanlage statt, die im folgenden unter Bezugnahme auf Fig. 2 näher beschrieben wird.

Jeder Dehydrator 10 besteht aus einem Gehäuse 40, in dem sich ein Rost oder lochplattenartiger Träger 41 aus einem korrosionsfesten und geschmacksneutralen Material befindet. Über der Oberseite des Trägers 41 ist ein feinmaschiges Gewebe 42 mit Maschenweiten von 5 bis 30 μ aus vorzugsweise monofilen, geschmacks- und geruchsneutralen Kunststoffen gespannt. Zweckmäßigerweise ist dieses Gewebe dasselbe wie im Flachbettfilterextraktor 6. In der Mitte des Gehäuses 40 ist eine Auftragvorrichtung 43 angeordnet, die aus einem an der Gehäusedecke drehbar aufgehängten, vertikalen Rohr 44 und einem zweiarmigen Querrohr 45 am unteren Ende des vertikalen Rohres 44 besteht. An der Unterseite des Querrohres 45 sind Austrittsdüsen 46 vorgesehen, die als rotierende Düsen, Einstoffdüsen, Zweistoffdüsen oder Misch- bzw. Dispergierdüsen ausgebildet sein können.

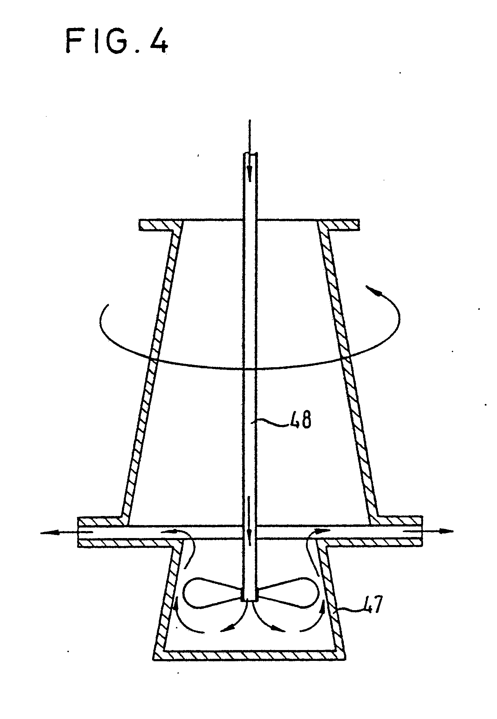

Eine bevorzugte Ausführungsform einer Dispergierdüse ist in Fig. 4 als schematischer Längsschnitt dargestellt und besteht im wesentlichen aus einem nach oben sich konisch verengenden Becher 47, der um ein feststehendes Rührwerk 48 drehbar gelagert ist. Die hochkonzentrierte Lösung gelangt über das feststehende Rührwerk in den rotierenden Becher, dort wird Luft oder ein anderes Gas in die hochkonzentrierte Lösung eingeschlagen, so daß eine Dispersion entsteht, die an der Becherwand hochsteigt und durch Öffnungen radial nach außen geschleudert wird.

Über die Auftragvorrichtung 43 gelangt die hochkonzentrierte Extraktlösung auf das Gewebe 42. Die Auftragvorrichtung läuft kontinuierlich um, so daß die zu dehydratisierende Lösung schichtweise auf dem Gewebe 42 aufgetragen wird. Mittels des Förderdruckes, der Düsenquerschnitte, sowie der Umlaufgeschwindigkeit der Auftragvorrichtung wird gewährleistet, daß unter Berücksichtigung eines gleichzeitig durch das Gehäuse und der sich auf dem Gewebe 42 aufbauenden Extraktschicht geführten entfeuchteten, gasförmigen Trocknungsmediums niedrigster Temperatur, die am Anfang des

8

Umlaufes der Auftragvorrichtung auf dem Gewebe 42 aufgetragene Extraktlösung bis zur erneuten Rückkehr der Auftragvorrichtung nach einem vollen Umlauf an den Ausgangspunkt so weit dehydratisiert ist, daß die nächste Schicht in der Weise aufgenommen werden kann, daß die beiden aufeinanderfolgenden Schichten eine Verbindung miteinander eingehen, sich jedoch nicht so verdichten, daß der Durchtritt des Trocknungsgases behindert würde, bzw. die fein und feinstporöse Struktur der Extraktschicht zerstört würde. Die sich aufbauende poröse Schicht aus getrocknetem Extrakt ist in ihrer Struktur einem porösen Gebäck oder Kuchen sehr ähnlich.

Zur Führung des Trocknungsgases ist ein Rohrleitungssystem 50 vorgesehen, dessen Ventile 51 es gestatten, daß das entfeuchtete Trocknungsgas wahlweise von oben her oder von unten her durch den Träger 41, das Gewebe 42 und die auf dem Gewebe sich stufenweise aufbauende Schicht geführt werden kann. Vor dem Eintritt in das Gehäuse 40 wird das Trocknungsgas durch einen Filter 52 geführt. Die Förderung des Trocknungsgases erfolgt mit einem Gebläse 53. Die Entfeuchtung des Trocknungsgases erfolgt in dem Rotationsadsorber 11.

Eine erste Extraktschicht wird auf dem Gewebe 42 gebildet, indem die zu dehydratisierende Lösung von oben auf das Gewebe 42 aufgetragen wird, während das Trocknungsgas entsprechend der oberen Pfeilspitze des Doppelpfeiles 54 im Gegenstrom zur Extraktschicht von unten her durch den Träger und das Gewebe geführt wird. Es bildet sich auf dem Gewebe 42 eine feinporöse Extraktschicht. Ist diese Extraktschicht als Trennschicht zwischen dem Gewebe 42 und der sich darauf aufbauenden Extraktschichten gebildet, so wird die Strömungsrichtung des Trocknungsgases umgekehrt, so daß nunmehr Lösungs- und Trocknungsgas von oben her auf das Gewebe 42 treffen, um aus Hunderten und Tausenden von einzelnen Schichten eine einzelne zusammenhängende Schicht aufzubauen, die eine feinporöse Struktur hat.

Am Ende des Aufbaues der Extraktschicht folgt eine Scharftrocknung mit extrem trockenem, kaltem Trocknungsgas.

Ist die granulöse, aber noch zusammenhängende Extraktschicht bis zu der gewünschten Höhe aufgebaut, wird sie in ein Granulat zerlegt. Hierzu wird ein rotierendes sich schrauben- oder hubförmig absenkendes Messer 62 in die Schicht bewegt. Das Granulat wird zusammen mit dem bei diesem Vorgang entstehenden Pulver von der restlichen Schicht durch eine geeignete Absaugvorrichtung entfernt. Als eine geeignete Absaugvorrichtung wäre ein geschlitztes Rohr denkbar, an dem das Messer befestigt ist. Das Austragen des Granulats und des Pulvers kann auch über eine Zyklone oder einen Filter im Staubsaugersystem erfolgen.

Anstelle die Auftragvorrichtung 43 zu verwenden, könnten die Düsen 46 an der Gehäusedecke verteilt fest angebracht werden. Diese Düsen könnten intermittierend oder auch kontinuierlich arbeiten. Bei einem intermittierenden Betrieb wird zwischen den Sprühintervallen so lange abgeschaltet, bis die aufgesprühte Schicht getrocknet ist. Bei dem kontinuierlichen Betrieb der Düsen muß die Sprühmenge so geregelt werden, daß die aufgesprühte Schicht sehr rasch trocknet.

Bei kleineren Dehydratoren würde es genügen, lediglich eine Düse an der Gehäusedecke vorzusehen.

Sowohl durch die Art des Auftragens als auch des Abtragens der Extraktschicht kann die Struktur des Granulats beeinflußt werden, so daß sie z. B. an die eines durch Gefriertrocknung hergestellten Granulats angenähert werden kann. In jedem Fall unterscheidet sich das nach dem erfindungsgemäßen Verfahren hergestellte Granulat nicht nur durch seine überragenden organoleptischen Eigenschaften, sondern auch in seiner physikalischen Struktur von herkömmlichen Granulaten.

Wie bereits angedeutet, entsteht neben dem Granulat in dem Gehäuse 40 auch Extraktstaub, der sich zum Teil an einer das Gehäuse auskleidenden Folie 40a niederschlägt. Ist das erzeugte Granulat aus dem Gehäuse entfernt, so wird die Folie mit einer mechanischen Vorrichtung ausgeschüttet, so daß der Extraktstaub aufgefangen und einer Wiederverwendung zugeführt werden kann.

Anstelle eines starren Gehäuses kann der Dehydrator so ausgebildet sein, daß die Folie nach der Art bekannter Traglufthallen selbst das Gehäuse bildet. Insbesondere in diesem Fall, aber auch bei der ersten Variante, kann auf eine mechanische Schüttelvorrichtung für das Ausschütteln der Folie verzichtet werden und die Folie durch wiederholte Druckänderung innerhalb des von der Folie umschlossenen Raumes ausgeschüttelt und vom Extraktstaub befreit werden. Wiederum insbesondere im zweiten Fall findet ein flexibles, teflonbeschichtetes Tuch Anwendung.

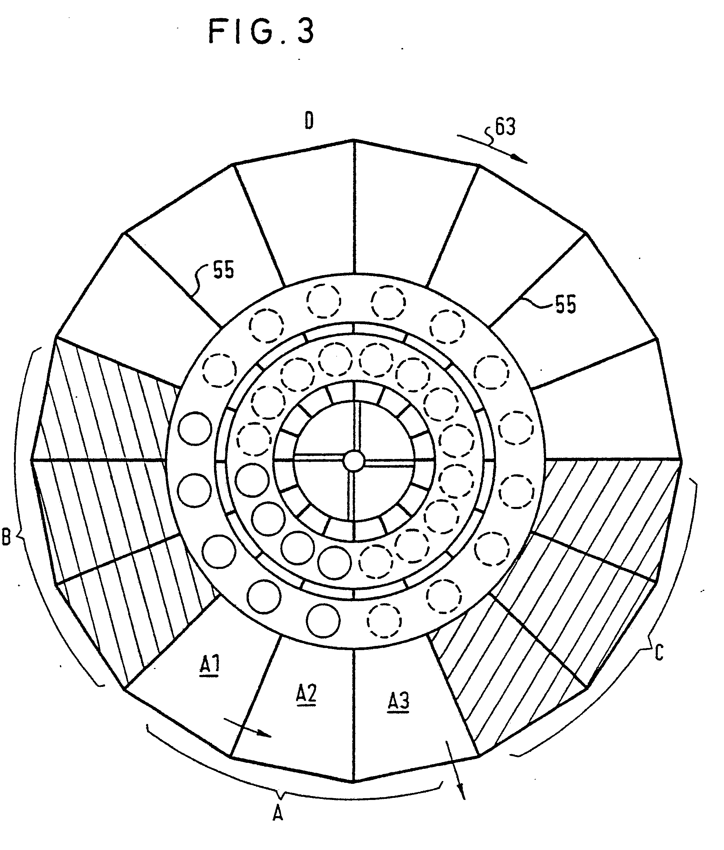

Der Adsorber 11 ist ein Hohlzylinder und besteht aus einzelnen sektorförmigen Kammern (Fig. 3), die durch radiale Trennwände 55 voneinander getrennt sind. Sie sind mit Silikagel gefüllt, durch das das Trocknungsgas hindurchgeleitet wird, um entfeuchtet zu werden. Das Trocknungsgas strömt somit in einem geschlossenen Kreis, den das Rohrleitungssystem 50 bildet. Die Desorption des Silikagels in dem Adsorber 11 erfolgt mit Inertgas, das in einem Rohrleitungssystem 56 geführt ist. Durch entsprechende Umschaltvorrichtungen ist es möglich, das Silikagel in einem Teil der Kammern aufzubereiten, und mittels des Silikagels in einem anderen Teil der Kammern das Trocknungsgas zu entfeuchten.

Bei der als Ausführungsbeispiel vorgesehenen Lösung besteht der Adsorber aus insgesamt 16 Kammern. Das in den drei Kammern A befindliche Gel wird aufbereitet. Die Kammern B sind in Parallelschaltung in den Primärkreis 50 eingeschaltet, daß das die Kammern B verlassende Trocknungsgas unmittelbar in den Dehydrator 40 von insgesamt drei Dehydratoren gelangt, in dem das zu trocknende Gut in der dritten Trocknungsphase der Schlußtrocknung unterliegt. Die Kammern B wurden unmittelbar vor der betrachteten, momentanen Betriebsphase mit ihrem Gel frisch aufbereitet. Die Kammern C liegen so im Primärkreis 50, daß das sie verlassende Trocknungsgas dem Dehydrator 40 zugeführt wird, der in der ersten Trocknungsphase, d. h. im Gegenstrom, arbeitet. In der unmittelbar vor der momentan betrachteten Betriebsphase gehörten die Kammern C zu der Gruppe D der jetzt betrachteten Betriebsphase, die so im Primärkreis liegen, daß das sie verlassende Trocknungsgas dem Dehydrator 40 zugeleitet wird, in dem das zu trocknende Gut in der zweiten Phase bei Gleichstrombetrieb der eigentlichen Trocknung unterliegt. Die Kammern der Gruppe B, C und D werden im Parallelbetrieb vom Trocknungsgas durchströmt.

Das die Kammern der Gruppe B verlassende Trocknungsgas gelangt, wie erwähnt, in den Dehydrator 40, in dem die Schlußtrocknung des zu trocknenden Gutes durchgeführt wird. Von diesem Gas wird jedoch ein Teil abgezweigt, um in die Kammer A1 der Kammergruppe A zu gelangen, um dort die Endaufbereitung des Geles zu bewirken, d. h. Kühlung des getrockneten Geles, ohne dieses zu befeuchten, die eigentliche Trocknung (Regenerierung, Desorption) des Geles erfolgt in der Kammer A2, in die das noch unverbrauchte Gas des Sekundärkreises 56 gelangt, d. h. das Inertgas höchster Temepratur und mit dem geringsten Feuchtigkeitsgehalt. In der Kammer A2 erfolgt die Desorption bei einer Temperatur von etwa 160°C. Zugemischt wird dem Inertgas aus dem Kreis 56 in der Kammer A2 das die Kammer A1 verlassende Inertgas, das die Temperatur hat, die sich aus der Kühlung des Geles in der Kammer A1 ergibt und das trocken ist. In der Kammer A3 erfolgt eine Vorwärmung und Vordesorption des Geles, indem in diese Kammer das die Kammer A2 verlassende Gas gelangt. Das den Kammerblock A verlassende Gas wird nun noch einer Gruppe von Wärmetauschern 12 zugeführt, wo die noch verbliebene fühlbare Wärme, insbesondere die Kondensationswärme des kondensierenden Wassers, an die Wärmetauscher abgegeben wird, ehe dieses Gas ins Freie entlassen wird. In den Sekundärkreis ist außer dem Adsorber 11 noch die Turbine 57 geschaltet, deren Abgase das in einem Abgasreiniger 58 und einem Filter 59 gereinigte Inertgas des Sekundärkreises 56 liefert und die die zum Betrieb der Anlage benötigte Energie liefert. Der Förderung der Verbrennungsluft dient ein Ventilator 60.

Die Einführung der Wärme, die von dem den Kammerblock A verlassenden Gas an die Wärmetauscher 12 abgegeben wird, in den der Regeneration des Adsorbens dienenden Sekundärkreis erfolgt mittels Inertgas, das in einem dritten Kreis 61 strömt, der als geschlossener Kreis die Wärmetauscher und den Adsorber einschließt. Leckverluste in diesem Kreis 61, ebenso wie im Primärkreis 50 die Austragungsverluste, werden aus dem ins Freie entweichenden Gas des Kreises 56 entnommen. Auch die Wärmetauscher werden mit wechselnden Funktionen benutzt. Jeweils ein Wärmetauscher nimmt Wärme aus dem Abgas des Kreises 56 auf, um sie nach Umschaltung an das Gas des Kreises 61 abzugeben.

Eine sinnvolle Mischung der Gasströme in Verbindung mit der mehrfachen Ausnutzung des Wärmeinhaltes des Trocknungsmediums ergibt eine maximale Energieausnutzung.

Ist jeweils ein Arbeitstakt beendet, so wird der Anschluß des Adsorbers an das Rohrleitungssystem durch Drehung in Richtung des Pfeils 63 um den Betrag einer Kammerbreite geändert. Dies kann durch entsprechend schaltbare Ventile, durch Drehen des gesamten Adsorbers oder durch einen entsprechenden Drehschieber geschehen. Die Ventile bedeuten einen relativ hohen Bauaufwand, aber eine große Flexibilität. Die Drehung des Adsorbers und insbesondere die Anwendung eines Drehschiebers bedeuten eine erhebliche bauliche Vereinfachung, aber eine gewisse Starrheit des Programms, die jedoch im allgemeinen hinnehmbar ist, weil meist über einen längeren Zeitraum hinweg gleichartiges Gut getrocknet wird.

Ein Teil der Primärluft aus dem Adsorber geht durch einen der drei Wärmetauscher, und zwar durch den, der abgekühlt werden muß, um für den nächsten Arbeitstakt für die Kondensation bereitzustehen. Dabei wird die Wärme vom Gas des dritten Kreises aufgenommen, das sich z. B. von 20°C auf 30°C erwärmt.

Umgekehrt ist der Wärmetauscher dann als Kondensator umgeschaltet.

Zusammenfassend könnte man das Trocknungsverfahren als ein Mehrstufen-Adsorption-Dehydratationsverfahren bezeichnen.

Das in den Wärmetauschern gewonnene Kondensat, das noch Aromastoffe enthalten kann, wird der Extraktionsanlage über den Speicher 28 wieder zugeführt, um bei der Extraktion verwendet zu werden.

Das dem jeweiligen Dehydrator 40 entnommene, getrocknete Kaffeekonzentrat gelangt in einen Aromareadsorber 13, in dem dem getrocketen Kaffeeextrakt die Aromastoffe wieder zugesetzt werden, die dem Kaffee im letzten Stadium der Röstung, bei der Kühlung, Mahlung und im Aromadesorber 4 entzogen worden sind und die demzufolge durch den Konzentrations- und Dehydratationsprozeß nicht beeinträchtigt worden sind. Das so angereicherte Endprodukt wird in hoher geschmacklicher Qualität der Verpackung zugeführt.

Im folgenden werden eine Reihe von Varianten und Alternativen zu den einzelnen Verfahrensschritten und der dafür eingesetzten Vorrichtung aufgezeigt, wobei darauf hinzuweisen ist, daß bei der Vielzahl der Möglichkeiten nur die wichtigsten herausgegriffen sind.

Die Naßmahlung kann auch dadurch erfolgen, daß der dem Extraktor nach einem Extraktionsvorgang entnommene, ausgelaugte Filterkuchen dem zu vermahlenden Stoff beigemischt wird. Hierdurch läßt sich die Ausbeute steigern.

Der Filterkuchen, der im letzten Extraktionsvorgang besonders hart und trocken wird und wie ein Holzpfropfen im Extraktor sitzt, kann auch nach der Entnahme zur Erzeugung von Wärme, die dem Prozeß zuzuführen ist, verfeuert werden. Der Filterkuchen braucht hierzu nicht mehr von Restfeuchtigkeit durch Auspressen befreit werden, da er durch die Absaugung der Lösung mit Unterdruck bereits stark ausgetrocknet ist.

Wenn andere als aromastoff- und geschmacksstoffreiche Stoffe zu Trockenextrakten verarbeitet werden, kann das Extraktorgehäuse auch offen sein, denn das Verschließen des Gehäuses dient lediglich dazu, daß verhindert wird, daß bei der Extraktion Aromastoffe entweichen. Es ist auch denkbar, daß das Lösungsmittel bzw. die Lösung von oben her in den Extraktor eingeführt wird, wobei dann allerdings keine Spülung des Gewebes auftritt.

Die Extraktion kann dadurch variiert werden, daß der gesamte Verfahrensabschnitt bei Raumtemperatur stattfindet. Hierdurch wird zwar die Ausbeute etwas vermindert, dafür läßt sich aber eine besonders gute Aromaqualität beim Endextrakt erzielen. Anstelle eines Filterbettextraktors können auch mehrere verwendet werden, wodurch das Verfahren insgesamt beschleunigt werden kann. Der Wärmetauscher kann auch zur Abkühlung aller Lösungsmengen eingesetzt werden, wodurch vermieden wird, daß eine Fermentierung auftritt, wenn z. B. die Anlage für eine bestimmte Zeit außer Betrieb gesetzt werden muß. Eine Variante der Extraktion besteht auch darin, daß die Lösungsmenge höchster Konzentration unter anderem dazu verwendet wird, die Konzentration der anderen Lösungsmengen auf den vorbestimmten Wert anzuheben, wenn sich z. B. durch Unregelmäßigkeiten in der Anlage dieser Wert nicht von selbst eingestellt hat. Im übrigen ist auch die Zahl der Behälter der Extraktionsbatterie je nach Auslegung der Anlage vergrößer- oder verkleinerbar. Zur Erhöhung der Temperaturen der Lösungsmengen niedriger Konzentration könnte auch anstelle des Wärmetauschers eine Heizung in dem jeweiligen Behälter oder auch direkt im Filterbettextraktor vorgesehen werden. Die Größe des Filterbettextraktors ist ebenfalls variierbar, wobei allerdings darauf geachtet werden muß, daß die Größe des Filterbetts in einem solchen Verhältnis zur Schichthöhe steht, daß die Lösung noch genügend schnell durch das Trennmedium abgesaugt werden kann. Ein schneller Ablauf der Lösung sollte nicht mehr als 0,5 bis 2 Minuten betragen. Die Ablaufgeschwindigkeit kann natürlich erhöht werden, indem man anstatt mit Unterdruck mit einem genügend hohen Überdruck fährt.

Auch bei der Trocknungsanlage gibt es viele Varianten und Alternativen. So können z. B. die Trocknungsgehäuse starr sein und auf der Innenseite mit Teflon beschichtet sein, so daß ein Haften von Extraktstaub an den Wänden des Gehäuses vermieden werden kann. Die Größe der Trocknungsgehäuse ist produktabhängig und ist z. B. für nicht hygroskopische Stoffe so gewählt, daß die Ausbeute zwischen 300 und 800 g/m$^2$/Std. beträgt. Das Austragen der auf dem Träger aufgebauten Extraktschicht kann auch mittels Bürsten erfolgen. Um zu vermeiden, daß die erste Schicht von aufgesprühtem Kaffee-Extrakt an dem Träger anhaftet, kann vor dem ersten Auftrag Extraktpulver auf den Träger gestreut werden. Dieses Pulver agglomeriert dann mit der auftreffenden dehydratisierenden Lösung. Der Auftragsvorgang läßt sich ferner derart variieren, daß der fertig getrocknete Extrakt in seiner Struktur und Farbe an das mittels herkömmlicher Methoden wie z. B. durch Gefriertrocknung oder Instantisieren hergestellte Granulat angenähert oder auch davon sehr verschieden gemacht werden kann. In jedem Fall unterscheidet sich aber der Trockenextrakt, der nach dem erfindungsgemäßen Verfahren hergestellt worden ist, von herkömmlichen Trockenextrakten durch seine organoleptischen und physikalsichen Eigenschaften.

## Patentansprüche

1. Verfahren zur Herstellung eines sofort löslichen Trockenextraktes aus einem natürlichen Stoff, in welchem der Stoff zunächst gemahlen wird, dann Extraktivstoffe aus dem gemahlenen Stoff mit Extraktlösungen unterschiedlicher Konzentration im Gegenstrom extrahiert werden und die jeweilige Extraktlösung höchster Konzentration nach ihrer weiteren Anreicherung mit Extraktivstoffen in einem entfeuchteten Trocknungsgasstrom dehydratisiert wird, der dabei Feuchtigkeit aufnimmt, die ihm später wieder entzogen wird, dadurch gekennzeichnet, daß

a) der Stoff fast kolloidal fein zu Teilchen mit einer Korngröße von unter 100 μm vermahlen wird,

b) in beliebig oft wiederholbaren Extraktionsvorgängen jeweils eine frische Menge des gemahlenen Stoffes in einer dünnen Schicht mit einer Höhe von 1 bis 200 mm auf ein Filtermedium aufgebracht wird und die Extraktlösungen in der Reihenfolge abnehmender Konzentration nacheinander mit dem Stoff jeweils vermischt und von ihm über das Filtermedium wieder abgetrennt werden, wobei die Extraktion im wesentlichen bei einer Verfahrenstemperatur von 15° C bis 30° C durchgeführt wird,

c) bei der Dehydratation die zu dehydratisierende Extraktlösung fein verteilt in dem entfeuchteten Trocknungsgasstrom auf einen für den zu trocknenden Extrakt undurchlässigen, für den Trocknungsgasstrom jedoch durchlässigen Träger aufgebracht wird, wobei sich auf dem Träger eine

**0 073 807**

dehydratisierte Extraktstoffschicht bildet, die anschließend in ein Extraktgranulat und/oder -pulver zerlegt wird und die Temperatur des Trocknungsgasstromes gering ist,

d) der Trocknungsgasstrom die bei der Dehydratation aufgenommene Feuchtigkeit durch Adsorption an ein Adsorptionsmittel wieder abgibt und

e) ein heißer Gasstrom abwechselnd mit dem Trocknungsgasstrom durch das Adsorptionsmittel geleitet und anschließend abgekühlt wird, wobei er die von dem Adsorptionsmittel desorbierte Feuchtigkeit aufnimmt und bei seiner Abkühlung als Kondensator wieder abgibt.

2. Verfahren nach Anspruch 1, dadurch gekennzeichnet, daß der Stoff zu Teilchen mit einer Korngröße von 1 bis 50 µm vermahlen und auf das Filtermedium in einer Schichthöhe von 20 bis 40 mm aufgebracht wird und daß die Extraktlösungen durch Unterdruck von dem Stoff über das Filtermedium abgetrennt werden.

3. Verfahren nach Anspruch 1 oder 2, dadurch gekennzeichnet, daß die Vermahlung des Stoffes als Naßmahlung unter Zugabe von Extraktionsflüssigkeit oder Extraktionsrückstand erfolgt.

4. Verfahren nach einem der vorhergehenden Ansprüche, dadurch gekennzeichnet, daß der Aufbau der Trockenextraktstoffschicht kontinuierlich oder intermitierend in einer Vielzahl von Einzelschichten erfolgt, wobei die Gesamtschichthöhe zwischen 10 und 200 mm, vorzugsweise zwischen 10 und 100 mm, liegt.

5. Verfahren nach Anspruch 4, dadurch gekennzeichnet, daß die zu dehydratisierende Extraktlösung zusammen mit pulverisiertem Trockenextrakt dem Trocknungsgasstrom ausgesetzt wird, so daß eine Agglomeration des Pulvers eintritt.

6. Verfahren nach Anspruch 4, dadurch gekennzeichnet, daß auf dem Träger zuerst eine Schicht Extraktpulver und dann erst die zu dehydratisierende Extraktlösung aufgebracht wird, wobei eine Agglomeration des Pulvers eintritt.

7. Verfahren nach Anspruch 5 oder 6, dadurch gekennzeichnet, daß die zu dehydratisierende Extraktlösung durch Zusetzen von Inertgas oder Luft verschäumt wird.

8. Anlage zur Durchführung des Verfahrens nach einem der vorhergehenden Ansprüche, mit einer Mahlvorrichtung, einer Extraktionsvorrichtung, einer Dehydratationsvorrichtung und einer Vorrichtung zur Entfeuchtung des gasförmigen Trocknungsgasstroms, dadurch gekennzeichnet, daß die Mahlvorrichtung eine Kugelmühle (5) aufweist, die Extraktionsvorrichtung eine Vielzahl von miteinander verschalteten Speicherräumen (7a—71) und mindestens einen mit den Speicherräumen verbundenen Flachbettfilterextraktor (6) aufweist, der ein Filtermedium (35) mit einer Maschenweite von 1 bis 30 µm aufweist, die Dehydratationsvorrichtung mehrere jeweils ein Gehäuse (10) aufweisende Trocknungsvorrichtungen enthält und die Entfeuchtungsvorrichtung einen Adsorber (11) aufweist, der mit jedem der Gehäuse (10) der Trocknungsvorrichtungen durch jeweils eine Trocknungsgasleitung (50) verbunden ist.

9. Anlage nach Anspruch 8, dadurch gekennzeichnet, daß das Filtermedium (35) in dem Flachbettfilterextraktor (6) aus einem monofilen Gewebe besteht.

10. Anlage nach Anspruch 8 oder 9, dadurch gekennzeichnet, daß in den Trocknungsgehäusen (10) jeweils ein horizontalliegender und plattenförmig oder als Rost ausgebildeter Träger (41, 42) für die Trocknungsextraktschicht unterhalb eines um eine vertikale Achse sich drehenden Düsen, (46) aufweisenden Verteilerarmes (45) angeordnet ist.

11. Anlage nach Anspruch 8 oder 9, dadurch gekennzeichnet, daß in den Trocknungsgehäusen (10) jeweils ein horizontalliegender und plattenförmig oder als Rost ausgebildeter Träger (41, 42) für die Trockenextraktschicht unterhalb von einer oder mehreren fest angeordneten Düsen angeordnet ist.

12. Anlage nach Anspruch 10 oder 11, dadurch gekennzeichnet, daß jede Düse als Dispergierdüse ausgebildet ist.

13. Anlage nach Anspruch 12, dadurch gekennzeichnet, daß jede Dispergierdüse einen um ein feststehendes Rührwerk (48) rotierenden Becher (47) aufweist, aus dem die Dispersion radial herausgeschleudert wird.

14. Anlage nach einem der Ansprüche 10 bis 13, dadurch gekennzeichnet, daß der Träger eine starre ggf. gewellte Lochplatte oder ein Rost ist, deren bzw. dessen Oberseite von einem feinmaschigen Gewebe abgedeckt ist, das vorzugsweise ein monofiles Gewebe mit einer Maschenweite von 5 bis 30 µm ist.

15. Anlage nach einem der Ansprüche 8 bis 14, dadurch gekennzeichnet, daß jedes Trocknungsgehäuse eine folienartige Auffangvorrichtung an der Gehäusewand aufweist, die von einem im Innern des Gehäuses erzeugten Überdruck in ihrer Kontur gehalten ist, und durch ggf. mehrmaliges Verändern dieses Innendruckes von Extraktpulverstaubablagerungen zu befreien ist.

## Claims

1. A process of producing an immediately soluble dry extract from a natural substance, in which the substance is initially ground, then extractive substances are extracted from the ground substance by means of extract solutions of varying concentration in counter-flow, and the reespective extract solution of maximum concentration is, after having been further enriched with extractive substances, dehydrated in a de-moisturized drying gas stream, which takes on moisture in the process which is withdrawn from it again lateron, characterized in that

a) the substance is ground to nearly colloidal fineness to form particles having a grain size of less than 100 μm,

b) in extraction operations that may be repeated as often as desired, respectively a fresh quantity of the ground substance is applied in a thin layer of a height of from 1 to 200 mm onto a filter medium, and the extract solutions are in the order of decreasing concentration successively mixed respectively with the substance and are separated from it again through the filter medium, with the extraction being carried through substantially at a process temperature of from 15°C to 30°C,

c) upon dehydration, the extract solution to be dehydrated is, finely divided in the de-moistened drying gas stream, applied onto a carrier impervious over against the extract to be dried but pervious over against the drying gas stream, with a dehydrated extract substance layer forming on the carrier, which layer is subsequently split up into an extract granulate and/or powder, and the temperature of the drying gas stream is low,

d) the drying gas stream gives off the moisture received upon dehydration again to an adsorption agent through adsorption and

e) a hot gas stream is alternately with the drying gas stream, passed through the adsorption agent and is subsequently cooled, in which respect it takes up the moisture adsorbed on the adsorption agent and gives it off as condensate again when it is cooled.

2. A process as according to claim 1, characterized in that the substance is ground to form particles having a grain size of from 1 to 50 μm and is applied onto the filter medium in a layer height of from 20 to 40 millimeters, and in that the extrakt solutions are through negative pressure separated from the substance through the filter medium.

3. A process as according to claim 1 or 2, characterized in that grinding of the substance takes place as wet-grinding under the addition of extraction liquid or extraction residue.

4. A process as according to one of the preceding claims, characterized in that the makeup of the dry extract substance layer occurs continuously or intermittently in a plurality of individual layers, with the total layer height being at between 10 and 200 millimeters, preferably at between 10 and 100 millimeters.

5. A process as according to claim 4, characterized in that the extract solution to be dehydrated is exposed together with pulverized dry extract to the drying gas stream, so that there occurs an agglomeration of the powder.

6. A process as according to claim 4, characterized in that there initially is applied onto the carrier a layer of extract powder and in that the extract solution to be dehydrated is applied only thereafter, with agglomeration of the powder occurring.

7. A process as according to claim 5 or 6, characterized in that the extract solution to be dehydrated is foamed (frothed) throug the addition of inert gas or air.

8. A system for carrying through the process as according to one of the preceding claims, comprising a grinding device, an extraction device, a dehydration device and a device for demoisturizing the gaseous drying gas stream, characterized in that the grinding device includes a ball mill (5), the extraction device includes a plurality of interconnected storing compartments (7a—71) and at least one flatbed filter extractor (6), which includes a filter medium (35) of a mesh width of from 1 to 30 μm, the dehydration device includes a plurality of drying devices respectively having a housing (10), and the de-moisturizing device includes an adsorber (11), which is connected with each of the housings (10) of the drying devices through respectively one drying gas conduit (10).

9. A system as according to claim 8, characterized in that the filter medium (35) in the flatbed filter extractor (6) consists of a monofilamentary woven material.

10. A system as according to claim 8 or 9, characterized in that there is arranged in the drying housings (10) respectively one horizontally disposed and plate-configured carrier (41, 42) or a carrier designed as a grate for the dry extract layer beneath a distributor arm (45) having nozzles (46) and rotating about a vertical axis.

11. A system as according to claim 8 or 9, characterized in that there is arranged in the drying housings (10) respectively a horizontally disposed and plate-configured carrier (41, 42) or carrier designed as a grate for the dry extract layer beneath one or more fixedly arranged nozzles.

12. A system as according to claim 10 or 11, characterized in that each nozzle is designed as dispersing nozzle.

13. A system as according to claim 12, characterized in that each dispersing nozzle includes a cup (47) rotating about a stationary agitating mechanism (48), out of which cup the dispersion is flung radially.

14. A system as according to one of claims 10 to 13, characterized in that the carrier is a rigid, optionally corrugated perforated plate or a grate, whose upper side is covered by a fine-mesh woven material, which preferably is a monofilamentary fabric having a mesh width of from 5 to 30 μm.

15. A system as according to one of claims 8 to 14, characterized in that each drying housing includes a film-like collection device on the housing wall, which is retained as to its contour by an excess pressure created within the housing, and which is to be freed from depositions of extract powder dust through an optionally repeated variation of this internal pressure.

**Revendications**

1. Procédé permettant la préparation d'un extrait sec instantanément soluble à partir d'un produit naturel, dans lequel le produit est d'abord moulu, puis les substances séparables extraites à contre-courant du produit broyé par des solutions d'extrait de concentration différente, la solution de concentration maximale, enrichie en extraits, étant ensuite déshydratée dans un courant gazeux de desséchant sec, qui adsorbe l'humidité retenue pour la recéder ultérieurement, caractérisé en ce que

a) le produit est pulvérisé à l'état pratiquement colloïdal en particules d'une grosseur inférieure à 100 µm

b) dans chacun des cycles d'extraction, qui peuvent avoir une fréquence quelconque, une quantité fraîche de produit moulu est déposée en une couche mince de I à 200 mm de hauteur sur un milieu filtrant, les solutions d'extrait sont successivement mélangées au produit, par ordre de concentration décroissante, pour en être à nouveau séparées par l'intermédiaire du milieu précité, le processus d'extraction étant essentiellement assure à une température comprise entre 15°C et 30°C,

c) dans le processus de déshydratation, la solution d'extrait à déshydrater, dispersée dans un courant gazeux de desséchant sec, est appliquée sur un support perméable au courant précité, mais imperméable à l'extrait à sécher, une couche d'extrait déshydratée, décomposée ultérieurement en un granulé ou poudre, se formant ainsi sur le support, la température du courant gazeux de séchage étant par ailleurs minime,

d) le courant gazeux de séchage cède à un adsorbant l'humidité retenue par adsorption au cours de la déshydratation,

e) en alternance avec ce desséchant gazeux, un courant de gaz chaud est envoyé dans l'adsorbant, puis refroidi, ce courant se chargeant de l'humidité retenue par l'adsorbant, pour la recéder sous la forme d'un condensat pendant son refroidissement.

2. Procédé selon la revendication 1, caractérisé en ce que le produit est moulu en particules d'une grosseur comprise entre 1 et 10 µm, puis déposé sur le milieu filtrant en une couche de 20 à 40 mm de hauteur, et en ce que les solutions d'extrait sont séparées du produit par vide partiel, en traversant le milieu précité.

3. Procédé selon une des revendications 1 et 2, caractérisé en ce que la mouture du produit est une mouture humide, réalisée par addition du liquide ou du résidu d'extraction.

4. Procédé selon une quelconque des revendications précédentes, caractérisé en ce que la couche d'extrait sec est constituée, en continu ou discontinu, d'une multitude de couches individuelles, la hauteur globale de la couche se situant entre 10 et 200 mm, 10 et 100 mm de préférence.

5. Procédé selon la revendication 4, caractérisé en ce que la solution d'extrait à déshydrater est soumise au courant gazeux de séchage, avec l'extrait sec pulvérisé, provoquant ainsi une agglomération de la poudre.

6. Procédé selon la revendication 4, caractérisé en ce qu'une couche de poudre d'extrait est d'abord déposée sur le support, puis la solution d'extrait à déshydrater, ce qui permet à la poudre de s'agglomérer.

7. Procédé selon une des revendications 5 et 6, caractérisé en ce que la solution d'extrait à déshydrater est transformée en mousse par addition de gaz inerte ou d'air.

8. Installation pour la réalisation du procédé selon une quelconque des revendications précédentes, comportant un dispositif de mouture, une installation d'extraction, une installation de déshydratation, ainsi qu'un dispositif pour la dessication du courant gazeux de séchage, caractérisée en ce que le dispositif de mouture comprend un broyeur à boulets (5), l'installation d'extraction plusieurs récipients (7a—71) reliés entre eux et un extracteur à lit filtrant au moins (6), relié aux récipients précités et doté d'un milieu filtrant (35) d'une ouverture de mailles comprise entre 1 et 30 µm, l'installation de déshydratation se composant de plusieurs dispositifs de séchage respectivement munis d'un carter (10) et le dispositif de dessication d'un adsorbeur (11), que des conduites véhiculant le gaz de séchage (50) relient à chacun des carters (10) précités.

9. Installation selon la revendication 8, caractérisée en ce que le milieu filtrant (35) de l'extracteur (6) se compose d'un tissu de monofilaments.

10. Installation selon une des revendications 8 et 9, caractérisée en ce que chaque carter de séchage (10) comporte un support horizontal (41, 42) en forme de plaque ou de grille pour la couche d'extrait sec, ce support étant prévu audessous d'un bras distributeur (45) équipé de buses (46) et tournant autour d'un axe vertical.

11. Installation selon une des revendications 8 et 9, caractérisée en ce que chaque carter de sechage (10) comporte un support horizontal (41, 42) en forme de plaque ou de grille pour la couche d'extrait sec, ce support étant prévu audessous d'une ou plusieurs buses fixes.

12. Installation selon une des revendications 10 et 11, caractérisée en ce que chaque buse est réalisée sous la forme d'une buse de dispersion.

13. Installation selon la revendication 12, caractérisée en ce que chaque buse de dispersion présente un godet (47) qui tourne autour d'un agitateur fixe (48) et à partir duquel la dispersion est pulvérisée dans le sens radial.

14. Installation selon une quelconque des revendications 10 à 13, caractérisée en ce que le support est représenté par une grille ou une plaque perforée rigide et le cas échéant ondulée, dont la face supérieure est recouverte d'un tissu à mailles fines, tissu de monofilaments de préférence d'une ouverture de mailles comprise entre 5 et 30 m.

15. Installation selon une quelconque des revendications 8 à 14, caractérisée en ce que chaque carter de séchage présente sur sa paroi un système de captation en forme de film, dont le contour est maintenu par une surpression générée à l'intérieur du carter, et qu'une modification éventuellement réitérée de cette pression interne permet de libérer des dépôts de poussières d'extrait.

FIG.1

FIG.2

# FIG.3

# FIG. 4